# EUROPÄISCHE PATENTSCHRIFT

(11) **EP 2 862 262 B1**
(45) Veröffentlichungstag und Bekanntmachung des Hinweises auf die Patenterteilung: **17.02.2021**
(21) Anmeldenummer: 13733977.6
(22) Anmeldetag: 20.06.2013
(51) Int. Cl.: H02K 5/20

(54) **KÜHLMANTEL MIT EINEM DICHTMITTEL**
COOLING JACKET COMPRISING A SEALING MEANS
CHEMISE DE REFROIDISSEMENT DOTÉE D'UN MOYEN D'ÉTANCHÉITÉ

(30) Priorität: 25.07.2012 DE 102012213070
(43) Veröffentlichungstag der Anmeldung: 22.04.2015
(73) Patentinhaber: Siemens Aktiengesellschaft, 80333 München (DE)
(72) Erfinder: BÜTTNER, Klaus, 97618 Hollstadt (DE); HELLMUTH, Stephan, 97616 Bad Neustadt (DE); KIRCHNER, Klaus, 97645 Ostheim (DE); WARMUTH, Matthias, 97618 Windshausen (DE)
(86) Internationale Anmeldenummer: PCT/EP2013/062878
(87) Internationale Veröffentlichungsnummer: WO 2014/016063

(56) Entgegenhaltungen:
- EP-A2- 0 822 641
- WO-A1-2006/106086
- WO-A1-2012/079623
- CN-Y- 201 341 052
- DE-A1- 19 950 660

## Beschreibung

Die Erfindung betrifft einen Kühlmantel mit einem Dichtmittel, eine Maschine, insbesondere eine elektrische Maschine, die einen Kühlmantel umfasst sowie ein Verfahren zur Herstellung eines Kühlmantels.

Kühlmäntel werden zur Kühlung von Maschinen eingesetzt, um deren Leistung zu steigern. Der Kühlmantel umgibt den Teil der Maschine, der sich im Betrieb der Maschine erwärmt. Die Wärme wird durch ein im Kühlmantel fließendes Fluid vom Maschinenteil abgeführt. Ein Fluid kann gasförmig oder flüssig sein.

Aus der DE 10 2004 050 645 A1 ist ein Kühlmantel bekannt, der durch in einer Gehäusewand verlaufende Kühlkanäle gebildet ist. Eine Öffnung der Kühlkanäle wird durch einen Innendichtring abgedichtet, der formschlüssig mit der Gehäusewand verbunden ist. Der Innendichtring weist Ringausnehmungen zur Bildung eines Umlenkkanals für das durch den Kühlmantel fließende Fluid auf.

Die WO 2006/106086 A1 beschreibt einen mittleren Gehäuseabschnitt eines Gehäuses einer elektrischen Maschine, der Kühlkanäle aufweist, die durch O-Ringe abgedichtet sind. Ferner offenbart die WO 2012/079623 A1 eine Motorpumpeneinheit für ein Hochdruckreinigungsgerät sowie ein Hochdruckreinigungsgerät.

Bei den bekannten Kühlmänteln kommt die Wirkung der Dichtung, wie sie im Betrieb der elektrischen Maschine notwendig ist, erst nach der Montage der Lagerschilde zustande.

Der Erfindung liegt daher die Aufgabe zugrunde, ein unbeabsichtigtes Austreten des im Kühlmantel fließenden Fluids aus dem Kühlmantel bei verschiedenen Betriebssituationen zu verringern. Diese Aufgabe wird durch einen Kühlmantel, eine Maschine sowie ein Verfahren zur Herstellung eines Kühlmantels mit den Merkmalen der unabhängigen Ansprüche gelöst.

Der erfindungsgemäße Kühlmantel zur Kühlung mit einem im Kühlmantel fließenden Fluid umfasst die Merkmale von Anspruch 1.

Eine erfindungsgemäße Maschine, insbesondere eine erfindungsgemäße elektrische Maschine, umfasst einen erfindungsgemäßen Kühlmantel.

Die Aufgabe wird auch durch ein Verfahren zur Herstellung eines Kühlmantels gemäss Anspruch 6 gelöst.

Bei dem erfindungsgemäßen Verfahren zur Herstellung eines erfindungsgemäßen Kühlmantels wird Verbindung zwischen dem Mantel und dem Dichtmittel hergestellt.

Bei einer Maschine, insbesondere einer elektrische Maschine, kann die Dichtheit des erfindungsgemäßen Kühlmantels vor einer Befestigung eines Lagerschildes an dem Kühlmantel geprüft werden.

Der erfindungsgemäße Kühlmantel löst die Aufgabe, indem die radiale Verformung, die sich in die Öffnung erstreckt, den Mantel mit dem Dichtmittel verbindet. Vorteilhaft ist die Öffnung so abgedichtet, dass ein Austreten des im Kühlmantel fließenden Fluids aus der Öffnung verringert wird. Insbesondere tritt eine geringere Menge an Fluid aus dem Kühlmantel, wenn dieser bei einer Erstbefüllung mit einem Fluid betrieben wird. Bei einem Betrieb des Kühlmantels fließt das Fluid mit einem Druck durch den Kühlmantel. Der Druck ist in verschiedenen Betriebssituationen unterschiedlich. Die radiale Verformung verringert ein Austreten des im Kühlmantel fließenden Fluids, indem sie höheren Drücken und starken Druckschwankungen standhalten kann.

Bei dem Kühlmantel ist die Öffnung zwischen dem inneren Mantel und dem äußeren Mantel angeordnet. So kann die Öffnung leicht hergestellt werden. Insbesondere kann die Öffnung eine axiale Öffnung sein. Die axiale Öffnung erstreckt sich dabei in eine axiale Richtung. So kann die radiale Verformung einfach angebracht werden.

Die Öffnung des Mantels weist einen Abschnitt mit keilförmigem Querschnitt auf, der durch die radiale Verformung des Mantels gebildet ist, wobei sich die Öffnung in dem Abschnitt zum axialen Ende des Mantels hin verengt. Dies ermöglicht, dass das Dichtmittel durch das fließende Fluid nahezu über die gesamte axiale Länge des Dichtmittels eine Komprimierung erfahren kann. So können starke Druckschwankungen des fließenden Fluids in ihrer Auswirkung auf die radiale Verformung, die den Mantel mit dem Dichtmittel verbindet, insbesondere an der Dichtkante, reduziert werden. So kann in Betriebssituationen mit starken Druckschwankungen ein Austreten des Fluids aus dem Kühlmantel verringert werden.

Ein Kühlmantel kann die Form eines Hohlzylinders aufweisen. Die innere Fläche des Hohlzylinders wird durch den inneren Mantel gebildet und die äußere Fläche des Hohlzylinders wird durch den äußeren Mantel gebildet. Eine axiale Richtung des Kühlmantels ist dann durch die Rotationsachse des Hohlzylinders gegeben. Ein Kühlmantel, der die Form eines Hohlzylinders aufweist, kann einfach gefertigt werden.

Ein Kühlmantel kann auch eine von einem Hohlzylinder abweichende Form aufweisen. So kann der Kühlmantel abschnittsweise ebene Flächen aufweisen. Diese ebenen Flächen ermöglichen eine Lagerung des Kühlmantels auf einer Ebene.

Im Allgemeinen ist eine axiale Richtung des Kühlmantels durch eine Gerade festgelegt, die im Wesentlichen parallel zum Mantel des Kühlmantels verläuft. Eine radiale Richtung ist eine Richtung, die senkrecht zur axialen Richtung verläuft.

Das im Kühlmantel fließende Fluid kann im Wesentlichen zwischen dem inneren Mantel und dem äußeren Mantel in einem oder in mehreren Kanälen fließen. Mindestens ein Kanal kann die Öffnung aufweisen. Um eine einfachere Herstellung des Mantels zu ermöglichen, kann ein Kanal Öffnungen an verschiedenen axialen Enden des Mantels aufweisen.

Der Kühlmantel kann einen ersten Anschluss aufweisen, durch den das Fluid in einen Kanal des Kühlmantels fließen kann und einen zweiten Anschluss, durch den das Fluid den Kühlmantel verlassen kann. So kann ein Betrieb des Kühlmantels vor einem Einbau in einer Maschine erfolgen.

Vorteilhaft ist das im Kühlmantel fließende Fluid eine Flüssigkeit. Durch eine Flüssigkeit kann der Kühlmantel eine höhere Kühlleistung erreichen. Die Kühlleistung ist die Menge an Wärme, die der Kühlmantel durch das Fluid abtransportieren kann.

Ein nicht zur Erfindung gehörender Mantel für einen Kühlmantel weist neben den bereits angeführten Vorteilen auch den weiteren Vorteil auf, dass der Mantel vor dem Herstellen der Verbindung zwischen dem Mantel und dem Dichtmittel keine oder nur eine geringe radiale Verformung aufweisen muss. Ein vorab gefertigter Mantel kann so durch verschieden starke radiale Verformungen mit unterschiedlichen Dichtmitteln zusammenwirken und ermöglicht so verschiedene Varianten an Kühlmänteln.

Ein nicht zur Erfindung gehörendes Dichtmittel weist neben den bereits angeführten Vorteilen auch den weiteren Vorteil auf, dass das Dichtungsmittel ein Material aufweisen kann, das dem Fluid einen geringeren Widerstand entgegensetzt, als er für eine Abdichtung der Öffnung des Mantels notwendig wäre, wenn der Kühlmantel die radiale Verformung nicht aufweisen würde.

Eine erfindungsgemäße Maschine, insbesondere einer erfindungsgemäße elektrischen Maschine, weist neben den bereits angeführten Vorteilen auch den weiteren Vorteil auf, dass Komponenten der Maschine besser vor dem im Kühlmantel fließenden Fluid geschützt sind. Dies wird dadurch ermöglicht, dass der Kühlmantel ein eigenständiges Bauteil der Maschine, insbesondere der elektrischen Maschine, ist und so beim Herstellen der Maschine, insbesondere der elektrischen Maschine, durch Zusammenfügen von Bauteilen der Maschine, insbesondere der elektrischen Maschine, undichte Stellen mit einer geringeren Wahrscheinlichkeit auftreten. So gibt es bei der Herstellung der Maschine, insbesondere der elektrischen Maschine, eine geringere Zahl an Maschinen, insbesondere elektrischer Maschinen, die nachgearbeitet werden müssen. Eine Nacharbeitung der Maschine, insbesondere der elektrischen Maschine, bedingt ein zeitintensives Zerlegen der Maschine, insbesondere der elektrischen Maschine, und Austauschen der defekten Bauteile. Insbesondere ist das Zerlegen der Maschine, insbesondere der elektrischen Maschine zeitintensiv, wenn ein Bauteil innerhalb eines Gehäuses der Maschine, insbesondere der elektrischen Maschine, nur durch eine Demontage eines Teils austauschbar ist, an dem eine Komponente der Maschine, insbesondere der elektrischen Maschine, gelagert ist. Eine Komponente der Maschine, insbesondere der elektrischen Maschine kann eine Welle sein, die drehbar in dem Teil gelagert ist.

Weiterhin vorteilhaft bei einer erfindungsgemäßen Maschine ist, dass ein Gehäuse der elektrischen Maschine für eine Reparatur geöffnet werden kann, ohne dass eine Öffnung des Kühlmantels, insbesondere der Kanäle für das fließende Fluid, geöffnet werden muss. So können Bauteile der Maschine ausgetauscht werden, ohne dass eine Gefahr besteht, dass die Bauteile mit dem Fluid in Berührung kommen und so Schaden nehmen.

Besonders vorteilhaft ist eine erfindungsgemäße elektrische Maschine, die den erfindungsgemäßen Kühlmantel umfasst, da Bauteile einer elektrischen Maschine sehr empfindlich gegen Fluide sind. Fluide bestehen in der Regel aus elektrisch leitfähigen Stoffen, oder weisen diese als Verunreinigung auf. Wenn an einem Bauteil der elektrischen Maschine, insbesondere einer Wicklung, durch ein Fluid eine elektrisch leitfähige Verbindung hergestellt wird oder ein elektrisch Durchschlag erfolgt, kann durch einen erhöhten Stromfluss oder einer erhöhten Spannung nicht nur die Wicklung oder die gesamte elektrische Maschine zerstört werden, sondern auch Gefahr für Personen in der Nähe der elektrischen Maschine bestehen.

Das Ein erfindungsgemässe Verfahren zur Herstellung eines erfindungsgemäßen Kühlmantels weist neben den bereits angeführten Vorteilen auch den weiteren Vorteil auf, dass beim Herstellen der Verbindung zwischen dem Kühlmantel und dem Dichtmittel keine weiteren Bauteile innerhalb oder am Kühlmantel angeordnet sind, so dass die Verbindung ohne Rücksicht auf empfindliche oder hinderliche Bauteile hergestellt werden kann. Dadurch ist eine optimale Herstellung der Verbindung möglich, um ein unbeabsichtigtes Austreten des Fluids aus dem Kühlmantel bei verschiedenen Betriebssituationen zu verringern.

Ein nicht zur Erfindung gehörendes Verfahren zur Herstellung einer Maschine, insbesondere einer elektrischen Maschine, weist neben den bereits angeführten Vorteilen auch den weiteren Vorteil auf, dass der Kühlmantel alleine leicht zu transportieren ist und man ihn leicht in verschiedene Positionen bringen kann. So kann die Dichtheit des Kühlmantels vorteilhaft bei vielen unterschiedlichen Bedingungen, z.B. verschiedene Positionen des Kühlmantels, geprüft werden.

Vorteilhafte Ausgestaltungen der Erfindung sind in den abhängigen Ansprüchen angegeben.

So ist eine Ausgestaltung eines erfindungsgemäßen Kühlmantels vorteilhaft, bei der ein massives Teil die radiale Verformung aufweist. Das im Kühlmantel fließende Fluid wird an einem Austritt aus der Öffnung des Mantels durch die radiale Verformung, dem Dichtmittel und dem Mantel gehindert. Das Fluid erzeugt an der radialen Verformung, dem Dichtmittel und dem Mantel einen Druck. Dadurch, dass das massive Teil die radiale Verformung aufweist, wird eine Kraft, die der Druck bewirkt, in großem Maße von dem massiven Teil aufgenommen. Somit kann vorteilhaft durch die radiale Verformung an dem massiven Teil ein Austreten des im Kühlmantel fließenden Fluids bei einem hohen Druck verringert werden. Weiterhin wird durch die radiale Verformung des massiven Teils das Dichtmittel auch bei Druckänderungen oder bei einer Erstbefüllung des Kühlmantels mit dem Fluid das Dichtmittel in einer Position gehalten, so dass ein Austreten des Fluids verhindert wird.

Die radiale Verformung kann plastisch sein. Dadurch kann eine radiale Verformung in einer bestimmten Form am Kühlmantel angebracht werden, die nach dem Anbringen der radialen Verformung die bestimmte Form in vielen verschiedenen Betriebssituationen beibehält. So wird ein unbeabsichtigtes Austreten des im Kühlmantel fließenden Fluids aus dem Kühlmantel bei verschiedenen Betriebssituationen verringert.

In einer nicht zur Erfindung gehörenden Ausgestaltung eines Kühlmantels weist der Mantel die radiale Verformung auf. An dem Mantel kann in einfacher Weise durch ein Werkzeug eine radiale Verformung vor oder nach einem Anordnen des Dichtmittels in der Öffnung angebracht werden. Der Mantel bietet so vorteilhaft eine radiale Verformung an einem massiven Teil.

Das Werkzeug zum Erzeugen der radialen Verformung des Mantels kann sich dabei vorteilhaft über einen Querschnitt des Kühlmantels in radialer Richtung erstrecken, so dass durch ein Einpressen des Werkzeugs in den Mantel an allen Öffnungen zu Kanälen an dem axialen Ende des Kühlmantels, in denen das Fluid fließen kann, radiale Verformungen erzeugt werden.

Das Dichtmittel kann nicht zur Erfindung gehörend-eine Schweißnaht aufweisen. Die Schweißnaht ermöglicht ein Verschließen der Öffnung des Mantels mit einer hohen mechanischen Stabilität. Durch die radiale Verformung des Mantels hat die Öffnung eine so schmale Breite, dass eine einzelne Schweißnaht zum Verschließen der Öffnung des Mantels genügt. Eine einzelne Schweißnaht hat eine besonders hohe mechanische Stabilität.

Insbesondere kann in einem Arbeitsschritt eine durchgehende einzelne Schweißnaht am Kühlmantel erzeugt werden, die alle Öffnungen des Mantels zu den Kanälen des Kühlmantels verschließt.

Das Dichtmittel kann auch eine Dichtung aufweisen. Die Dichtung weist eine elastische Fläche auf, die mit der radialen Verformung eine Verbindung bilden, durch die ein Fluid unter hohem Druck nur in geringem Maße fließen kann. Vorteilhaft kann die radiale Verformung einen erhöhten Druck auf die elastische Fläche ausüben. Zusätzlich wird durch die radiale Verformung eine Dichtkante gebildet, die ein Fließen des Fluids zwischen dem Dichtmittel und der Fläche des inneren Mantels an der Öffnung behindert.

Der durch die radiale Verformung gebildete keilförmige Querschnitt eines Abschnitts der Öffnung bewirkt weiterhin, dass die Verbindung zwischen dem Mantel und dem Dichtmittel selbstverstärkend ist. Je stärker das im Kühlmantel fließende Fluid gegen das Dichtmittel drückt, desto besser ist die Verbindung zwischen dem Mantel und dem Dichtmittel gegen einen Austritt des Fluids abgedichtet.

Die Öffnung kann einen x-förmigen Querschnitt aufweisen, der durch die radiale Verformung des Mantels gebildet ist, wobei sich die Öffnung zum axialen Ende des Mantels hin bis zu einer Engstelle verengt und sich anschließend wieder aufweitet. Der aufgeweitete Bereich bewirkt eine weitere Abdichtung zwischen Mantel und Dichtmittel bei einer geringeren Krafteinwirkung auf die Dichtung über einen längeren Abschnitt. So wird durch einen weiteren Abschnitt ein unbeabsichtigtes Austreten des Fluids aus dem Kühlmantel verringert.

Die Öffnung des Mantels kann in axialer Richtung des Mantels verlaufen. Dies ermöglicht eine einfache Herstellung der radialen Verformung des Mantels.

Der Mantel des Kühlmantels kann vorteilhaft Mittel aufweisen, die das Herstellen der radialen Verformung erleichtern und/oder in einer definierten Weise ermöglichen.

Der innere Mantel des Mantels weist erfindungsgemäss die radiale Verformung auf. Dies hat den Vorteil, dass der äußere Mantel beim Herstellen der radialen Verformung am inneren Mantel als Anschlag für ein Werkzeug dienen kann. Weiterhin kann der äußere Mantel mit einer Dichtgeometrie in der Öffnung versehen werden, die ein Austreten des im Kühlmantel fließenden Fluids weiterhin verringert. Außerdem kann der äußere Mantel beim Herstellen der radialen Verformung am inneren Mantel als Anschlag für die Positionierung des Werkzeugs dienen. Vorteilhaft ist auch, dass das Dichtmittel sich in ein Bauteil erstrecken kann, das zusammen mit dem äußeren Mantel des Kühlmantels ein Gehäuse bildet. So kann die radiale Verformung, die den Mantel mit dem Dichtmittel verbindet das Dichtmittel so fixieren, dass ein Befestigen eines Teils des Gehäuses, insbesondere einem Lagerschild, an einem axialen Ende des Kühlmantels erleichtert wird.

Durch Anbringen der radialen Verformung am inneren Mantel kann der äußere Mantel eine definierte Länge behalten und kann so mit dem Bauteil ein definiertes Gehäuse bilden.

Die zusätzliche Nutzung des Dichtmittels als Dichtung des Gehäuses oder definierten Gehäuses verhindert ein Eindringen von Wasser in das Gehäuse, so dass eine Schutzart IP6K9K gewährleistet werden kann. Diese IP-Schutzart wird z.B. in der Deutschen Norm für Straßenfahrzeuge DIN 40050 Teil 9 beschrieben.

In einer weiteren vorteilhaften Ausgestaltung eines erfindungsgemäßen Kühlmantels ist die Öffnung in einer Richtung zum axialen Ende hin in verschiedenen Ebenen abgedichtet. Dies ermöglicht eine Führung des im Kühlmantel fließenden Fluids durch das Dichtmittel. So kann vorteilhaft im Kühlmantel auf Kanäle zum Umlenken der Flüssigkeit am axialen Ende des Kühlmantels verzichtet werden. Die Kanäle im Kühlmantel können so eine einfache Geometrie aufweisen. Dies führt zu einer einfachen Herstellung des Kühlmantels.

Die verschiedenen Ebenen können senkrecht zur axialen Richtung verlaufen, um das Umlenken auf einem kurzen Weg zu ermöglichen.

Das Dichtmittel kann eine Verbindung zum Umleiten des Fluids von einem Kanal zu einem zweiten Kanal aufweisen, wobei das Dichtmittel den ersten und den zweiten Kanal von einem dritten Kanal trennt. Die Trennung des dritten Kanals vom zweiten Kanal kann dadurch erfolgen, dass die Öffnung in einem Bereich zwischen dem zweiten und dem dritten Kanal in einer vom axialen Ende weiter entfernten Ebene abgedichtet ist, als in einem Bereich zwischen dem ersten und dem zweiten Kanal.

Das Dichtmittel kann eine Dichtung aufweisen, so dass die Abdichtung in verschiedenen Ebenen durch eine einfach vorzufertigende Dichtung realisiert werden kann. Hierzu kann die Dichtung in verschiedenen radialen Richtungen eine unterschiedliche Länge in axialer Richtung aufweisen.

In einer weiteren vorteilhaften Ausgestaltung eines erfindungsgemäßen Kühlmantels weist das Dichtmittel eine radiale Verformung auf. Dies hat den Vorteil, dass eine erfindungsgemäße radiale Verformung genutzt werden kann, ohne dass eine Verformung des Mantels notwendig ist. Die radiale Verformung des Dichtmittels erzeugt in einem ersten Querschnitt des Dichtmittels eine höhere Kompressionskraft als in einem zweiten Querschnitt des Dichtmittels. So wird ein unbeabsichtigtes Austreten des im Kühlmantel fließenden Fluids verringert.

Die Kompressionskraft kann in einer Richtung zum axialen Ende hin abnehmen. So wird in der Nähe eines ersten Endes des Dichtmittels, das vom axialen Ende des Mantels weiter entfernt ist, durch eine hohe Kompressionskraft ein Abdichten der Öffnung erreicht und in einem weiteren Bereich des Dichtmittels zu einem zweiten Ende hin, das näher am axialen Ende des Mantels liegt, eine weitere Abdichtung bei einer geringeren Kompressionskraft und ausgedehnteren Dichtflächen am inneren Mantel und äußerem Mantel erreicht.

Das Dichtmittel kann an dem ersten Ende eine Ausnehmung aufweisen, so dass das im Kühlmantel fließende Fluid zwischen dem inneren Mantel und dem äußeren Mantel näher an das axiale Ende des Mantels fließen kann, als in der Nähe der Fläche des inneren Mantels oder der Fläche des äußeren Mantels. Die Ausnehmung ermöglicht vorteilhaft einen Druck des im Kühlmantel fließenden Fluids zu einer selbstverstärkenden Verbesserung der Verbindung zwischen der radialen Verformung und dem Mantel. So wird ein unbeabsichtigtes Austreten des im Kühlmantel fließenden Fluids aus dem Kühlmantel verhindert.

Das Dichtmittel kann ein massives Teil umfassen, das ein massives Federteil ist, das eine radiale Verformung aufweist, die zumindest teilweise elastisch ist. So kann ein unbeabsichtigtes Austreten des im Kühlmantel fließenden Fluids aus dem Kühlmantel bei verschiedenen Betriebssituationen verringert werden, indem den in den Betriebssituationen schwankenden Kräften elastisch durch Verschließen der Öffnung entgegengewirkt werden kann.

Die oben beschriebenen Eigenschaften, Merkmale und Vorteile dieser Erfindung sowie die Art und Weise, wie sie erreicht werden, werden klarer und deutlicher verständlich im Zusammenhang mit der Beschreibung der Ausführungsbeispiele, die im Zusammenhang mit den Figuren dargestellt und näher erläutert werden. Es zeigen:
- FIG 1: ein erstes Ausführungsbeispiel eines Kühlmantels,
- FIG 2: ein Querschnitt entlang der Linie II-II der FIG 1,
- FIG 3: ein Ausführungsbeispiel einer elektrischen Maschine,
- FIG 4: ein Ausführungsbeispiel eines axialen Endes des Kühlmantels vor einem Anbringen der radialen Verformung,
- FIG 5, 6: Fig. 5 zeigt ein Ausführungsbeispiel für eine radiale Verformung am Kühlmantel wohingegen Fig. 6 ein nicht zur Erfindung gehörendes Beispiel zeigt,
- FIG 7: ein axiales Ende des Kühlmantels vor dem Anbringen einer radialen Verformung,
- FIG 8: ein weiteres Ausführungsbeispiel für eine radiale Verformung am Kühlmantel,
- FIG 9, 10: weitere nicht zur Erfindung gehörende Beispiele
- FIG 11, 12: Ausführungsbeispiele für ein Dichtmittel, das sich in ein Bauteil erstreckt,
- FIG 13: ein weiteres Ausführungsbeispiel eines Dichtmittels,
- FIG 14: ein nicht zur Erfindung gehörendes Beispiel eines Mantels,
- FIG 15: ein vergrößerter Teilbereich der FIG 14 in einer Umgebung eines axialen Endes.

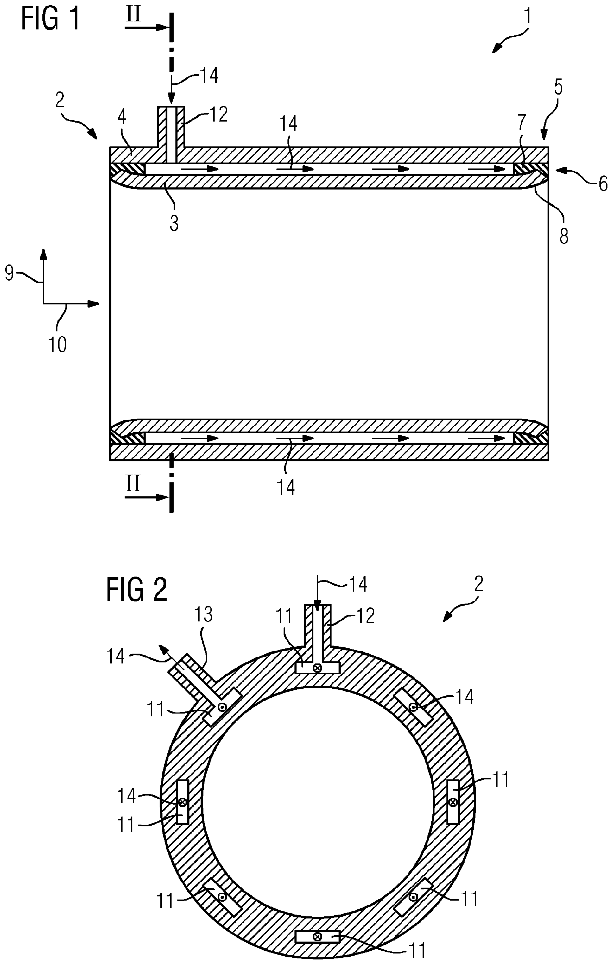

FIG 1 zeigt ein Ausführungsbeispiel eines Kühlmantels 1, der einen Mantel 2 umfasst und einen inneren Mantel 3 und einen äußeren Mantel 4 aufweist, wobei der Mantel 2 an einem axialen Ende 5 eine Öffnung 6 aufweist. Der Kühlmantel umfasst weiterhin ein Dichtmittel 7, das in der Öffnung 6 angeordnet ist und eine radiale Verformung 8, die den Mantel 2 mit dem Dichtmittel 8 verbindet, wobei sich die radiale Verformung 8 in die Öffnung 6 erstreckt.

In FIG 1 ist zur Orientierung am Kühlmantel 1 die axiale Richtung durch einen horizontalen Pfeil 10 und die radiale Richtung durch einen vertikalen Pfeil 9 eingezeichnet.

Der Kühlmantel 1 weist einen ersten Anschluss 12 auf, durch den ein im Kühlmantel fließendes Fluid 14 in den Kühlmantel gelangen kann. Die Richtung, in der das Fluid 14 fließt, ist durch Pfeile 14 in der FIG 1 eingezeichnet.

Der innere Mantel 3 und der äußere Mantel 4 sind hohlzylinderförmig aus massiven Teilen gebildet. Für die massiven Teile des inneren Mantels 3 und des äußeren Mantels 4 sind Aluminium-Strangpressteile verwendet worden, da an diesen die radiale Verformung 8 gut angebracht werden kann und eine Drehbearbeitung für Dichtgeometrien am äußeren Mantel 4 möglich ist.

FIG 2 zeigt einen Querschnitt entlang der Linie II-II der FIG 1. In FIG 2 ist der zweite Anschluss 13 für das Austreten des Fluids 14 aus dem Kühlmantel 1 gezeigt. Das durch den ersten Anschluss 12 in den Kühlmantel 1 eintretende Fluid 14 fließt in den Kühlmantel 1 mäanderförmig durch Kanäle 11 des Kühlmantels 1 zum zweiten Anschluss 13, wo es aus dem Kühlmantel 1 wieder austritt. Die Fließrichtung des Fluids 14, das eine Flüssigkeit ist, wird durch die Pfeile 14 in den Kanälen 11, im ersten Anschluss 12 und im zweiten Anschluss 13 repräsentiert.

Die Öffnung 6 erstreckt sich in die Kanäle 11. Zwischen den Kanälen 11 ist die Öffnung 6 am axialen Ende 5 des Mantels 2 als Nut ausgebildet, die durch den inneren Mantel 3 und den äußeren Mantel 4 berandet ist.

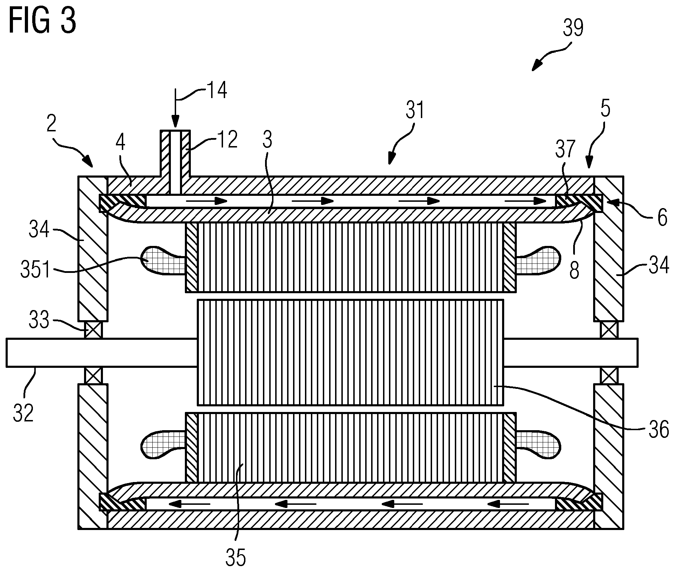

Die FIG 3 zeigt ein Ausführungsbeispiel einer elektrischen Maschine 39, die einen Stator 35, einen Rotor 36 und eine Wicklung 351 umfasst. Ein Gehäuse der elektrischen Maschine 39 umfasst einen Kühlmantel 31 und Lagerschilde 34. Der Rotor 36 weist eine Welle 32 auf und ist drehbar in den Lagerschilden 34 durch Lager 33 gelagert. Der Kühlmantel 31 umfasst den inneren Mantel 3 und den äußeren Mantel 4 sowie ein Dichtmittel 37, das in der Öffnung 6 angeordnet ist. Weiterhin umfasst der Kühlmantel 31 eine radiale Verformung 8, die den Mantel 2 mit dem Dichtmittel 37 verbindet. Die radiale Verformung 8 erstreckt sich in die Öffnung 6.

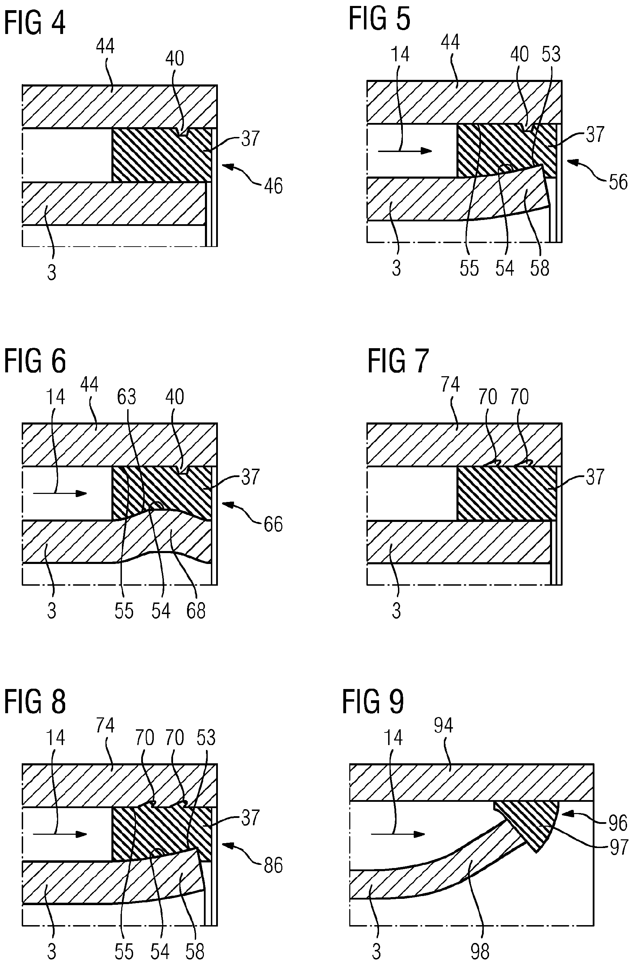

FIG 4 zeigt ein axiale Ende 5 eines Kühlmantels 1 vor einem Anbringen einer radialen Verformung an dem inneren Mantel 3 oder dem äußeren Mantel 44. Der äußere Mantel 44 weist eine Dichtgeometrie 40 auf, die sich in die Öffnung 46 erstreckt. So kann das Dichtmittel 37 vor bzw. während dem Anbringen einer radialen Verformung fixiert werden. Das Dichtmittel 37 ist eine Dichtung, die einen Gummi aufweist. Die Öffnung 46 ist eine axiale Öffnung 46.

FIG 5 zeigt ein Ausführungsbeispiel des axialen Endes 5 des Kühlmantels gemäß FIG 4 nach dem Anbringen einer radialen Verformung 58. Die radiale Verformung 58 erstreckt sich in die Öffnung 56. So übt die radiale Verformung 58 einen erhöhten Druck über die Fläche 54 des inneren Mantels 3 und die Fläche 55 des äußeren Mantels 44 auf eine elastische Fläche des Dichtmittels 37 aus. Zusätzlich wird durch die radiale Verformung 58 eine Dichtkante 53 gebildet, die ein Fließen des Fluids 14 zwischen dem Dichtmittel 37 und der Fläche 54 des inneren Mantels 3 an der Öffnung 56 behindert. Die radiale Verformung 53 bewirkt durch die Ausübung eines erhöhten Drucks auch, dass ein Fließen des Fluids 14 an der Fläche 55 des äußeren Mantels 44 durch die Dichtgeometrie 40 in starkem Maße behindert wird.

Die radiale Verformung 58 kann vorteilhaft durch ein Einpressen eines Werkzeugs erzeugt werden.

FIG 6 zeigt ein nicht zur Erfindung gehörendes Beispiel eines axialen Endes eines Kühlmantels 1. In FIG 6 bildet die radiale Verformung 68 des inneren Mantels 3 eine Öffnung 66, die einen x-förmigen Querschnitt aufweist.

FIG 7 zeigt ein axiales Ende eines Kühlmantels 1 vor einem Anbringen einer radialen Verformung. Der äußere Mantel 74 weist zwei Dichtgeometrien 70 auf.

FIG 8 zeigt ein axiales Ende eines Kühlmantels 1 nach dem Anbringen einer radialen Verformung 58. Die Öffnung 86 des Mantels 2 weist so - wie das Ausführungsbeispiel der FIG 5 - einen Abschnitt mit einem keilförmigen Querschnitt auf, der durch die radiale Verformung 58 des inneren Mantels 3 gebildet ist. In FIG 5 weist die Öffnung 56 des inneren Mantels 3 einen Abschnitt mit keilförmigem Querschnitt auf, der durch die radiale Verformung 58 des inneren Mantels 3 gebildet ist. In FIG 8 sind die Dichtgeometrien 70 durch Ausnehmungen der Fläche 55 des äußeren Mantels 74 gebildet. Dadurch, dass die radiale Verformung 58 auf die elastischen Flächen des Dichtmittels 37 einen erhöhten Druck ausübt, wird das Dichtmittel 37 in die Dichtgeometrien 70 gepresst, so dass ein Fließen des Fluids 14 zwischen Dichtmittel 37 und der Fläche 55 des äußeren Mantels 74 an der Öffnung 86 behindert wird.

FIG 9 zeigt ein nicht zur Erfindung gehörendes Beispiel eines axialen Endes eines Kühlmantels 1, bei der das Dichtmittel 97 eine Schweißnaht ist. Durch die radiale Verformung 98 des inneren Mantels 3 hat die Öffnung 96 vor dem Verschließen mit einer Schweißnaht 97 eine so schmale Breite, dass eine einzelne Schweißnaht zum Verschließen der Öffnung 96 des Mantels 2 genügt. Die radiale Verformung 98 verbindet so den Mantel 2, der den inneren Mantel 3 und den äußeren Mantel 94 aufweist, mit dem Dichtmittel 97, das eine Schweißnaht ist.

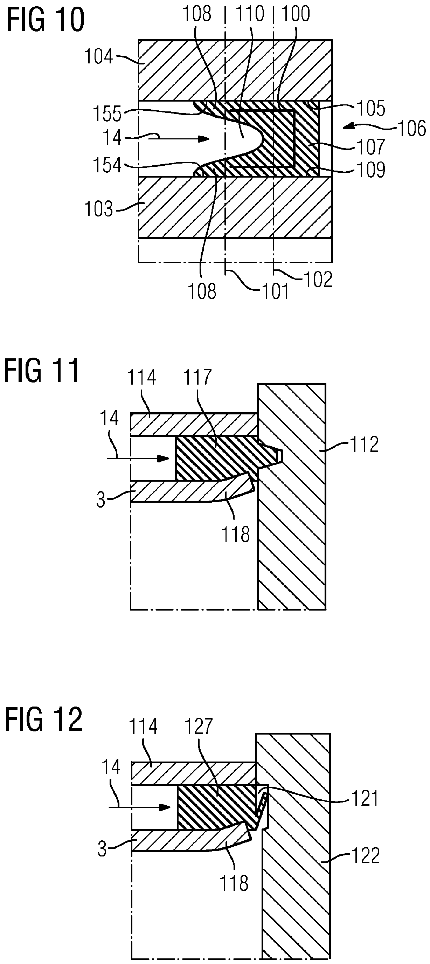

FIG 10 zeigt ein nicht zur Erfindung gehörendes Beispiel eines axialen Endes eines Kühlmantels 1, wobei ein Dichtmittel 107 eine radiale Verformung 108 aufweist. Die radiale Verformung 108 des Dichtmittels 107 erzeugt in einem ersten Querschnitt 101 eine höhere Kompressionskraft als in einem zweiten Querschnitt 102 des Dichtmittels 107. So wird ein unbeabsichtigtes Austreten des im Kühlmantel 1 fließenden Fluids 14 verringert. Um den Unterschied in den Kompressionskräften des ersten und des zweiten Querschnitts zu verstärken, weist das Dichtmittel 107 neben einem Gummi ein massives Federteil 100 auf. Das massive Federteil 100 weist einen Federstahl auf. Im Ausführungsbeispiel der FIG 10 nimmt die Kompressionskraft in einer Richtung zum axialen Ende hin ab. Es wird in der Nähe eines ersten Endes des Dichtmittels 107, das vom axialen Ende des Mantels weiter entfernt ist, durch eine hohe Kompressionskraft ein Abdichten der Öffnung 106 erreicht. In einem weiteren Bereich des Dichtmittels 107 zu einem zweiten Ende hin, das näher am axialen Ende des Mantels liegt, kann eine weitere Abdichtung bei einer geringeren Kompressionskraft und einer ausgedehnteren Dichtfläche 109 am inneren Mantel 103 sowie einer ausgedehnteren Dichtfläche 105 am äußeren Mantel 104 erreicht werden.

Das Dichtmittel 107 weist an dem ersten Ende eine Ausnehmung 110 auf, so dass das im Kühlmantel 1 fließende Fluid 14 zwischen dem inneren Mantel 103 und dem äußeren Mantel 104 näher an das axiale Ende des Mantels 2 fließt, als in der Nähe der Fläche 154 des inneren Mantels 103 oder der Fläche 155 des äußeren Mantels 104.

FIG 11 zeigt ein axiales Ende der elektrischen Maschine 39. Das Dichtmittel 117, welches ein Gummi aufweist, erstreckt sich in ein Bauteil, das ein Lagerschild 112 ist und das zusammen mit dem äußeren Mantel 114 des Kühlmantels 2 ein Gehäuse bildet. Der innere Mantel 3 weist eine radiale Verformung 118 auf, die das Dichtmittel 117 mit dem inneren Mantel 3 und dem äußeren Mantel 114 so verbindet, dass unabhängig von einem Vorhandensein des Lagerschilds 112 der Austritt des Fluids 14 aus dem Kühlmantel 1 verringert wird.

FIG 12 zeigt ein weiteres Ausführungsbeispiel eines axialen Endes der elektrischen Maschine 39. Das Dichtmittel 127 erstreckt sich in das Lagerschild 122, wobei es an einer Verbindungsstelle zwischen dem äußeren Mantel 114 und dem Lagerschild 122 einen Sammelraum 121 aufweist. Der Sammelraum 121 sammelt eine Flüssigkeit, die unbeabsichtigt aus einer Umwelt der elektrischen Maschine 39 an der Verbindungsstelle in die elektrische Maschine 39 eindringt. Weiterhin dichtet das Dichtmittel 127 die Verbindungsstelle, indem es auf eine Oberfläche des Lagerschilds 122 gepresst wird.

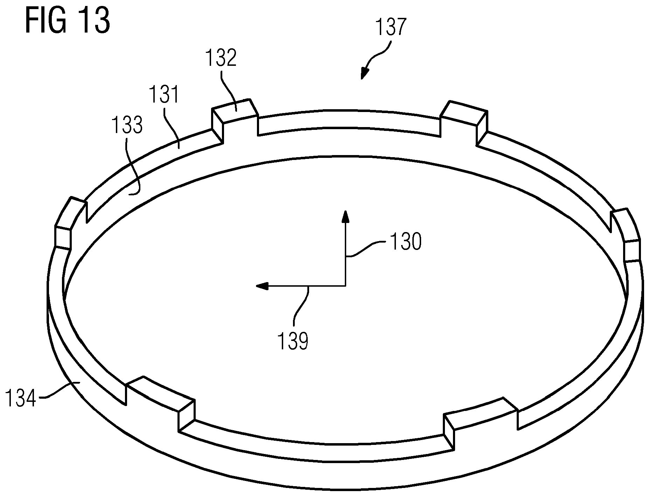

FIG 13 zeigt ein Ausführungsbeispiel eines Dichtmittels. Das Dichtmittel 137 hat in einer axialen Richtung 130 eine einfache durchgehende innere Fläche 133, die eine einfache Fertigung des Dichtmittels 137 ermöglicht. Es müssen an der inneren Fläche 133 des Dichtmittels 137 keine Ausnehmungen oder Vorsprünge vorhanden sein, die so ausgeprägt sind, dass das Dichtmittel 137 an dem Mantel 2 druckbeständig befestigt werden kann. Das Dichtmittel 137 wird durch eine erfindungsgemäße radiale Verformung im Mantel 2 gehalten.

Die äußere Fläche 134 des Dichtmittels 137 ist auch eine einfache durchgehende Fläche, die eine weitere Vereinfachung der Fertigung des Dichtmittels 137 ermöglicht.

In FIG 13 wird eine radiale Richtung durch den Pfeil 139 dargestellt.

Das Dichtmittel 137 weist einen ersten radialen Bereich 131 mit kleinerer Länge in axialer Richtung 130 und einen zweiten radialen Bereich 132 mit größerer Länge in axialer Richtung 130 auf. So weist das Dichtmittel 137 in verschiedenen radialen Richtungen eine unterschiedliche Länge in axialer Richtung 130 auf. Ein Mantel 2 eines Kühlmantels 1 kann so an einer Öffnung 6 in einer Richtung zum axialen Ende 5 hin in verschiedenen Ebenen abgedichtet sein unter Verwendung des Dichtmittels 137.

Bei Verwendung des Dichtmittels 137 verlaufen die verschiedenen Ebenen senkrecht zur axialen Richtung 130. So sind der erste und der zweite radiale Bereich 131 und 132 des Dichtmittels 137 durch einfache durchgehende Flächen gebildet.

Bei dem Ausführungsbeispiel des Dichtungsmittel 137 gemäß der Fig. 13 ist das Dichtungsmittel 137 eine Dichtung, die aus einem Gummi hergestellt ist.

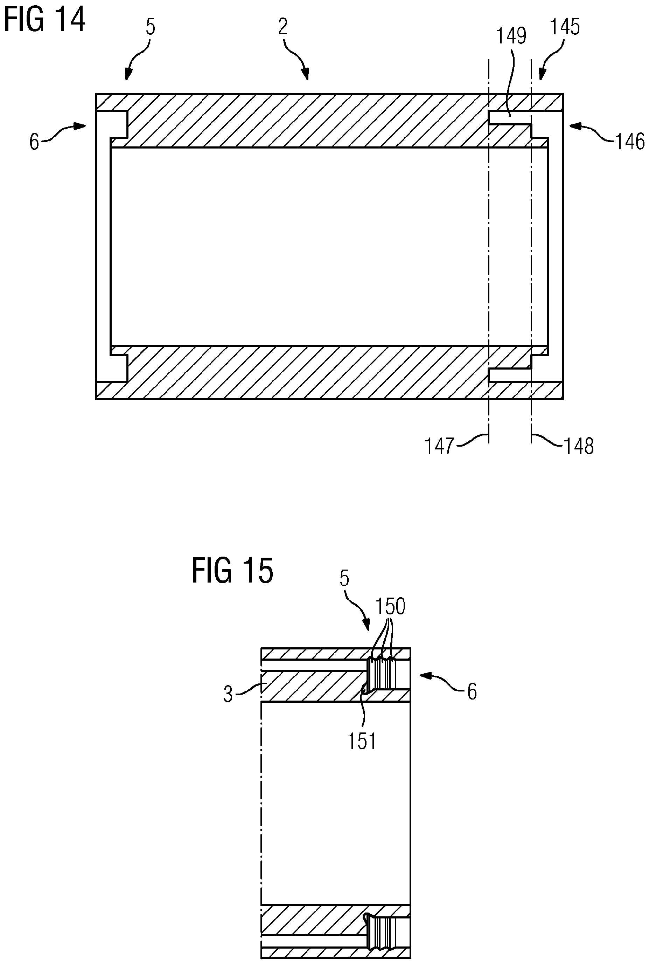

FIG 14 zeigt ein nicht zur Erfindung gehörendes Beispiel eines Mantels 2. Er weist eine Öffnung 146 auf. Diese weist eine Umlenköffnung 149 auf. Durch ein Anordnen des Dichtmittels 137 in der Öffnung 146 des Mantels 2 wird die Umlenköffnung 149 teilweise durch den zweiten radialen Bereich 132 des Dichtmittels 137 verschlossen. So wird ein Umleiten des Fluids von einem Kanal 11 zu einem zweiten Kanal 11 erreicht, wobei das Dichtmittel 137 den ersten und den zweiten Kanal 11 von einem dritten Kanal 11 durch den zweiten radialen Bereich 132 des Dichtmittels 137 trennt. Der Mantel 2 weist durch eine erste Ebene 147 des Mantels 2 und eine zweite Ebene 148 verschiedene Ebenen zum Abdichten des Kühlmantels 1 auf.

FIG 15 zeigt ein nicht zur Erfindung gehörendes Beispiel eines axialen Endes 5 eines Mantels 2. Das axiale Ende 5 weist in der Öffnung 6 Dichtgeometrien 150 auf. Um ein Anbringen einer radialen Verformung an dem axialen Ende 5 in einfacher Weise zu bewerkstelligen, weist der Mantel 2 am axialen Ende 5 vorteilhaft Mittel auf, die ein Herstellen einer radialen Verformung erleichtern und/oder in einer definierten Weise ermöglichen. Das Mittel ist eine Ausnehmung 151, die in der Öffnung 6 am inneren Mantel 3 angebracht ist.

## Patentansprüche

1. Kühlmantel (1,31) zur Kühlung mit einem im Kühlmantel (1,31) fließenden Fluid (14) umfassend
- einen Mantel (2), der einen inneren Mantel (3,103) und einen äußeren Mantel (4,44,74,94,104,114) aufweist, wobei der Mantel (2) an einem axialen Ende (5,145) eine zwischen dem inneren Mantel (3,103) und dem äußeren Mantel (4,44,74,94, 104,114) angeordnete Öffnung (6,46,56,86,96,106) aufweist,
- ein Dichtmittel (7,37,97,107,117,127,137), das in der Öffnung (6,46,56,86,96,106,146) angeordnet ist, und
- eine radiale Verformung (8,58,68,98,118), die den Mantel (2) mit dem Dichtmittel (7,37,97,107,117,127,137) verbindet,
**dadurch gekennzeichnet, dass** der innere Mantel (3,103) des Mantels (1,31) die radiale Verformung (8,58,68,98,118) aufweist, wobei sich die radiale Verformung (8,58,68,98,118) derart in die Öffnung (6,46,56, 86,96,106) erstreckt, dass die Öffnung (6,46,56,86,96,106) des Mantels (1,31) einen Abschnitt mit keilförmigem Querschnitt aufweist, der durch die radiale Verformung (8,58,68, 98,118) des Mantels (1,31) gebildet ist, wobei sich die Öffnung (6,46,56,86,96,106) in dem Abschnitt zum axialen Ende des Mantels (1,31) hin verengt.

2. Kühlmantel (1,31) nach Anspruch 1, wobei ein massives Teil (3,100) die radiale Verformung (8,58,68,98,108,118) aufweist.

3. Kühlmantel (1,31) nach einem der vorhergehenden Ansprüche, wobei die Öffnung (6,46,56,86,96,106,146) in einer Richtung zum axialen Ende hin in verschiedenen Ebenen (147,148) abgedichtet ist.

4. Kühlmantel (1,31) nach Anspruch 1 oder 2, wobei das Dichtmittel (107) eine radiale Verformung (108) aufweist.

5. Maschine, insbesondere elektrische Maschine, umfassend einen Kühlmantel (1,31) nach einem der Ansprüche 1 bis 4.

6. Verfahren zur Herstellung eines Kühlmantels (1,31) nach einem der Ansprüche 1 bis 4, wobei der Kühlmantel hergestellt wird, umfassend
- den Mantel (2), der den inneren Mantel (3,103) und den äußeren Mantel (4,44,74,94,104,114) aufweist, wobei der Mantel (2) an einem axialen Ende (5, 145) die zwischen dem inneren Mantel (3,103) und dem äußeren Mantel (4,44,74,94, 104,114) angeordnete Öffnung (6,46,56,86,96,106) aufweist,
- das Dichtmittel (7,37,97,107,117,127,137), das in der Öffnung (6, 46, 56, 86, 96, 106, 146) angeordnet ist, und
- die radiale Verformung (8,58,68,98,118), die den Mantel (2) mit dem Dichtmittel (7,37,97,107,117,127,137) verbindet,
**dadurch gekennzeichnet, dass** der innere Mantel (3,103) des Mantels (1,31) die radiale Verformung (8,58,68,98,118) aufweist, wobei sich die radiale Verformung (8,58,68,98,118) derart in die Öffnung (6,46,56, 86,96,106) erstreckt, dass die Öffnung (6,46,56,86,96,106) des Mantels (1,31) einen Abschnitt mit keilförmigem Querschnitt aufweist, der durch die radiale Verformung (8,58,68, 98,118) des Mantels (1,31) gebildet wird, wobei sich die Öffnung (6,46,56,86,96,106) in dem Abschnitt zum axialen Ende des Mantels (1,31) hin verengt, wobei eine Verbindung zwischen dem Mantel (2) und dem Dichtmittel (7,37,97,107,117, 127,137) hergestellt wird.

## Claims

1. Cooling jacket (1,31) for cooling by means of a fluid (14) flowing in the cooling jacket (1,31) comprising
- a jacket (2) that has an inner jacket (3,103) and an outer jacket (4,44,74,94,104,114), wherein the jacket (2) has an opening (6,46,56,86,96,106) arranged between the inner jacket (3,103) and the outer jacket (4,44,74,94,104,114) at an axial end (5,145),
- a sealing means (7,37,97,107,117,127,137) arranged in the opening (6, 46, 56, 86, 96, 106, 146) and
- a radial deformation (8,58,68,98,118) which connects the jacket (2) to the sealing means (7,37,97,107,117,127,137),
**characterised in that**
the inner jacket (3,103) of the jacket (1,31) has the radial deformation (8,58,68,98,118), wherein the radial deformation (8, 58, 68, 98, 118) extends into the opening (6, 46, 56, 86, 96, 106) in such a way that the opening (6,46,56,86,96,106) of the jacket (1,31) has a section with a wedge-shaped cross section which is formed by the radial deformation (8,58,68,98,118) of the jacket (1,31), wherein the opening (6,46,56,86,96,106) tapers in the section towards the axial end of the jacket (1, 31).

2. Cooling jacket (1,31) according to claim 1, wherein a solid part (3,100) has the radial deformation (8,58,68,98,108,118).

3. Cooling jacket (1,31) according to one of the preceding claims, wherein the opening (6,46,56,86,96,106,146) is sealed in a direction towards the axial end in different planes (147, 148).

4. Cooling jacket (1,31) according to claim 1 or 2, wherein the sealing means (107) has a radial deformation (108).

5. Machine, in particular an electric machine, comprising a cooling jacket (1,31) according to one of claims 1 to 4.

6. Method for producing a cooling jacket (1,31) according to one of claims 1 to 4, wherein the cooling jacket is produced, comprising
- the jacket (2) that has the inner jacket (3,103) and the outer jacket (4,44,74,94,104,114), wherein the jacket (2) has the opening (6,46,56,86,96,106) arranged between the inner jacket (3,103) and the outer jacket (4,44,74,94,104,114) at the axial end (5,145),
- the sealing means (7,37,97,107,117,127,137) that is arranged in the opening (6, 46, 56, 86, 96, 106, 146) and
- the radial deformation (8,58,68,98,108,118) which connects the jacket (2) to the sealing means (7,37,97,107,117,127,137),
**characterised in that**
the inner jacket (3,103) of the jacket (1,31) has the radial deformation (8,58,68,98,118), wherein the radial deformation (8, 58, 68, 98, 118) extends into the opening (6, 46, 56, 86, 96, 106) in such a way that the opening (6,46,56,86,96,106) of the jacket (1,31) has a section with a wedge-shaped cross section which is formed by the radial deformation (8,58,68,98,118) of the jacket (1,31), wherein the opening (6,46,56,86,96,106) tapers in the section towards the axial end of the jacket (1,31), wherein a connection is created between the jacket (2) and the sealing means (7,37,97,107,117,127,137).

## Revendications

1. Chemise (1, 31) de refroidissement pour le refroidissement d'un fluide (14) passant dans la chemise (1, 31) de refroidissement et comprenant
- une chemise (2), qui a une chemise (3, 103) intérieure et une chemise (4, 44, 74, 94, 104, 114) extérieure, la chemise (2) ayant, à une extrémité (5, 145) axiale, une ouverture (6, 46, 56, 86, 96, 106) disposée entre la chemise (3, 103) intérieure et la chemise (4, 44, 74, 94, 104, 114) extérieure,
- un moyen (7, 37, 97, 107, 117, 127, 137) d'étanchéité, qui est disposé dans l'ouverture (6, 46, 56, 86, 96, 106, 146), et
- une déformation (8, 58, 68, 98, 118) radiale, qui relie la chemise (2) au moyen (7, 37, 97, 107, 117, 127, 137) d'étanchéité,
**caractérisée en ce que**
la chemise (3, 103) intérieure de la chemise (1, 31) a la déformation (8, 58, 68, 98, 118) radiale, la déformation (8, 58, 68, 98, 118) radiale s'étendant dans l'ouverture (6, 46, 56, 86, 96, 106) de manière à ce que l'ouverture (6, 46, 56, 86, 96, 106) de la chemise (1, 31) ait une partie de section transversale cunéiforme, qui est formée par la déformation (8, 58, 68, 98, 118) radiale de la chemise (1, 31), l'ouverture (6, 46, 56, 86, 96, 106) se rétrécissant dans la partie allant vers l'extrémité axiale de la chemise (1, 31).

2. Chemise (1, 31) de refroidissement suivant la revendication 1, dans laquelle une partie (3, 100) pleine a la déformation (8, 58, 68, 98, 108, 118) radiale.

3. Chemise (1, 31) de refroidissement suivant l'une des revendications précédentes, dans laquelle l'ouverture (6, 46, 56, 86, 96, 106, 146) est rendue étanche dans des plans (147, 148) différents dans une direction allant vers l'extrémité axiale.

4. Chemise (1, 31) de refroidissement suivant la revendication 1 ou 2, dans laquelle le moyen (107) d'étanchéité a une déformation (108) radiale.

5. Machine, notamment machine électrique, comprenant une chemise (1, 31) de refroidissement suivant l'une des revendications 1 à 4.

6. Procédé de fabrication d'une chemise (1, 31) de refroidissement suivant l'une des revendications 1 à 4, dans lequel on fabrique la chemise de refroidissement, comprenant
- la chemise (2), qui a la chemise (3, 103) intérieure et la chemise (4, 44, 74, 94, 104, 114) extérieure, la chemise (2) ayant, à une extrémité (5, 145) axiale, l'ouverture (6, 46, 56, 86, 96, 106) disposée entre la chemise (3, 103) intérieure et la chemise (4, 44, 74, 94, 104, 114) extérieure,
- le moyen (7, 37, 97, 107, 117, 127, 137) d'étanchéité, qui est disposé dans l'ouverture (6, 46, 56, 86, 96, 106, 146), et
- la déformation (8, 58, 68, 98, 118) radiale, qui relie la chemise (2) au moyen (7, 37, 97, 107, 117, 127, 137) d'étanchéité,
**caractérisé en ce que**
la chemise (3, 103) intérieure de la chemise (1, 31) a la déformation (8, 58, 68, 98, 118) radiale, la déformation (8, 58, 68, 98, 118) radiale s'étendant dans l'ouverture (6, 46, 56, 86, 96, 106) de manière à ce que l'ouverture (6, 46, 56, 86, 96, 106) de la chemise (1, 31) ait une partie de section transversale cunéiforme, que l'on forme par la déformation (8, 58, 68, 98, 118) radiale, l'ouverture (6, 46, 56, 86, 96, 106) se rétrécissant dans la partie allant vers l'extrémité axiale de la chemise (1, 31), dans lequel on ménage une liaison entre la chemise (2) et le moyen (7, 37, 97, 107, 117, 127, 137) d'étanchéité.
